# EUROPEAN PATENT APPLICATION

(11) **EP 4 773 475 A1**
(43) Date of publication of application: **08.07.2026**
(21) Application number: 26150159.7
(22) Date of filing: 05.01.2026
(51) Int. Cl.: H02K 1/272, H02K 9/00, H02K 9/22, H02K 9/20

(54) **ELECTRIC MOTOR FOR A MOTOR VEHICLE WITH IMPROVED COOLING OF A ROTOR THEREOF**

(30) Priority: 07.01.2025 IT 202500000081
(71) Applicant: FERRARI S.p.A., 41100 Modena (IT)
(72) Inventor: BALLATORE, Marco, 41100 MODENA (IT); GAMBA, Matteo, 41100 MODENA (IT); MOSCARDI, Andrea, 41100 MODENA (IT)
(74) Representative: Studio Torta S.p.A.

(57) **Abstract**

An electric motor (2) comprises a stator (4) and a rotor (5) rotatable around a rotor axis (A) fixed with respect to the stator (4), characterized in that the rotor (5) comprises a phase change material (PCM) solid or semi-solid at ambient temperature and adapted to liquefy at a liquefaction temperature within a range of operating temperatures of the electric motor (2).

## Description

### CROSS-REFERENCE TO RELATED APPLICATIONS

This patent application claims priority from Italian patent application no. 102025000000081 filed on January 7, 2025, the entire disclosure of which is incorporated herein by reference.

### TECHNICAL FIELD

The invention concerns an electric motor for a motor vehicle and more specifically for a high performance or racing sports motor vehicle.

### PRIOR ART

As known, at least for some applications, the rotor of an electric motor requires cooling during operation.

In particular, the need for cooling is even more keenly felt for high power and high performance applications such as, for example, in the case of propulsion of sports or racing motor vehicles.

Normally the electric motors are provided with a cooling jacket, namely substantially a plurality of channels arranged in thermal contact with the rotor, usually in the area of the radially external surfaces of the rotor, to which a cooling liquid is fed to cool the rotor.

Although the cooling jacket represents a generally satisfactory solution for cooling the rotor, an effective implementation thereof introduces drawbacks associated with the complexity of integration on the motor and overall weight of the motor.

In general, the need is felt to improve cooling of the rotor of an electric motor for the propulsion of a motor vehicle, in particular of sports or racing type.

More in particular, the need may also be felt to alleviate the above-mentioned drawbacks.

One object of the invention is to respond to at least one of the needs illustrated above, preferably in a simple repeatable manner.

### DESCRIPTION OF THE INVENTION

The object is achieved by an electric motor for a motor vehicle, as defined in claim 1.

The dependent claims define particular embodiments of the invention.

### BRIEF DESCRIPTION OF THE DRAWINGS

Below, embodiments of the invention are described for a better understanding thereof by way of non-limiting examples and with reference to the attached drawings in which:
- figure 1 is a perspective view of a motor vehicle comprising an electric vehicle according to the invention,

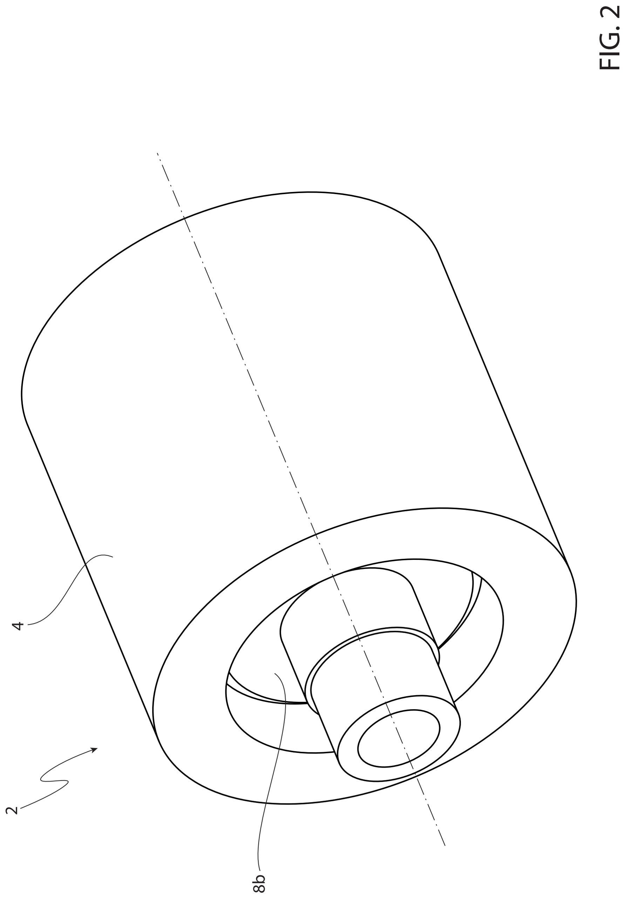

- figure 2 is a perspective view, on an enlarged scale, of the electric motor of the vehicle of figure 1,
- figure 3 is an exploded view of the electric motor according to a first embodiment of the invention,
- figure 4 is a longitudinal section of the electric motor of figure 3,
- figure 5 is an exploded view of the electric motor according to a variant of a second embodiment of the invention,
- figure 6 is a longitudinal section of the electric motor of figure 5,
- figure 7 is a cross section of the electric motor according to a section plane represented by the line VII-VII in figure 6,
- figure 8 is an exploded view of the electric motor according to a further variant of the second embodiment of the invention,
- figure 9 is a longitudinal section of the electric motor of figure 8,
- figure 10 is a cross section of the electric motor according to a section plane represented by the line X-X in figure 9, and
- figure 11 is a graph that shows the time evolution of a temperature of rotors of a known electric motor, the motor according to the first embodiment, and the motor according to the second embodiment respectively.

### EMBODIMENTS OF THE INVENTION

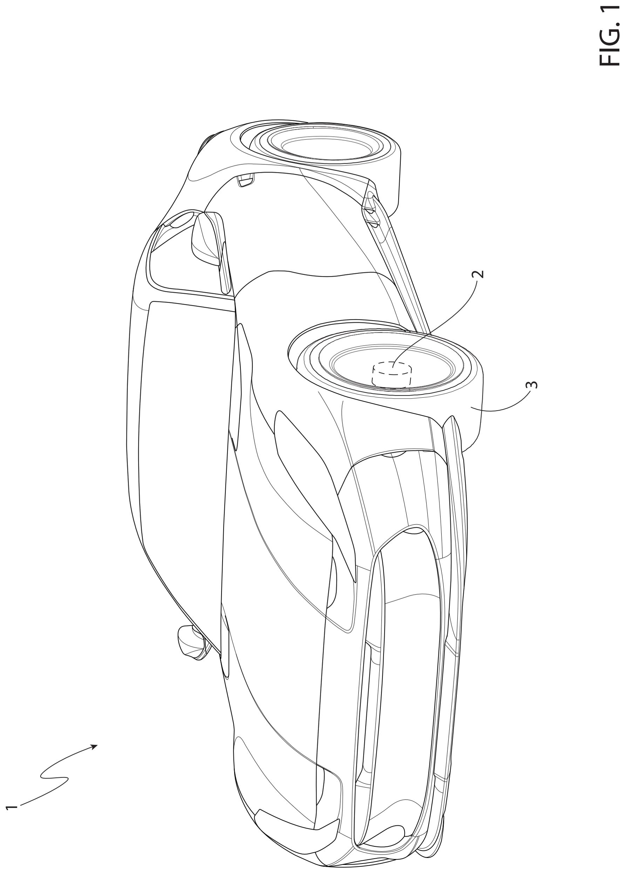

In figure 1, the reference number 1 is used to indicate, overall, a motor vehicle.

The motor vehicle 1 comprises an electric motor 2, in particular for the propulsion thereof. In other words, the motor vehicle 1 comprises traction members, in particular at least a pair of wheels 3 (of which only one is illustrated in figure 1), to support a forward movement of the motor vehicle 1 on the ground. The electric motor 2 is coupled to the traction members, for example in a known manner not illustrated, to deliver power to said traction members, namely specifically to cause rotation of the wheels 3.

For example, the electric motor 2 is integrated with one of the wheels 3, so that the electric motor 2 and the wheel 3 form an in-wheel motor.

The electric motor 2 comprises a stator 4 and a rotor 5 rotatable around a rotor axis A fixed with respect to the stator 4. In other words, the rotor 5 is coupled to the stator 4 in a rotatable manner with respect to the stator 4 around the rotor axis A.

Preferably, the rotor 5 comprises one or more permanent magnets M (illustrated schematically). In particular, the stator 4 comprises windings (not illustrated) for powering the electric motor 2.

For example, the electric motor 2 is a permanent magnet synchronous motor. The type of electric motor 2 could also be different.

In the embodiments illustrated, by way of non-limiting example, the rotor 5 comprises two rotor portions 5a, 5b which are distinct but coupled to each other so as to rotate together at the same speed around the rotor axis A, in particular by magnetic interaction with the stator 4, for example according to manners known per se and therefore not described in detail.

Without loss of generality, the rotor 5 could possibly comprise only one of the two portions 5a, 5b, with the other of the portions 5a, 5b optionally present or not.

The electric motor 2 or the rotor 5 has a range of operating temperatures, namely a set of temperatures or rated temperature values, namely predefined (for example by theoretical or experimental evaluation), such that the operation of the electric motor 2 is considered reliable or viable. In other words, outside the operating temperature range, the electric motor 2 or the rotor 5 are subject to potential malfunctions with greater probability of a predefined acceptable reliability threshold.

More simply, the operating temperature range can be defined as the set of temperature values for which the electric motor 2 is designed to function normally.

In particular, the operating temperature range is delimited at the upper end by a maximum rated temperature, for example between 120° and 180° Celsius. For example, the maximum rated temperature could be a maximum temperature acceptable for the permanent magnets M, beyond which the permanent magnets M could fail with greater probability of a predefined acceptable threshold.

The operating temperatures are not generally uniform throughout the entire rotor 5, but a mean operating temperature exists, in addition to a standard deviation of the operating temperatures associated with the set of points or more practically the finished volumes that make up the entire volume of the rotor 5.

The rotor 5 comprises a phase change material PCM, namely it comprises one or more elements made of the material PCM, which is solid or semi-solid (namely in a gelatinous or wax or colloid state) at room temperature, namely a temperature between 15° and 35° Celsius, and is adapted to liquefy or more simply liquefies at a liquefaction temperature in the operating temperature range of the electric motor 2 or of the rotor 5.

Therefore, the liquefaction temperature is higher than the ambient temperature and lower than the maximum rated temperature.

For example, the liquefaction temperature is between 45° and 150° Celsius.

In particular, the material PCM could be a paraffin wax.

According to an example, the material PCM is arranged at and more specifically only at the finite volumes (of the rotor 5) having operating temperatures higher than the mean or more preferably higher than the mean increased by one or two times the standard deviation.

Alternatively or additionally, the material PCM is arranged, in particular in its entirety, in an annular configuration (possibly with multiple portions separated circumferentially and/or axially from one another) around the rotor axis A, in particular so as to occupy the finite volumes with operating temperatures higher than the mean or more preferably higher than the mean increased by one or two times the standard deviation.

For example, the material PCM constitutes a mass or volume percentage of the rotor greater than 20%, more preferably greater than 70% or even 80%.

The material PCM is contained, for example divided into a plurality of blocks or cartridges, inside cavities 6 of a rotor body 7 forming part of the rotor 5. More precisely, the blocks of the material PCM are arranged in the respective cavities 6.

According to a possible non-limitative aspect, the rotor body 7 is a single body and/or is monolithic.

According to a possible non-limitative aspect, the cavities 6 are directly defined by the rotor body 7 and/or are directly delimited by the rotor body 7.

According to a possible non-limitative aspect, the material PCM is directly housed within the cavities 6 or directly contained by the cavities 6, namely without being enclosed by further housings (that is, housings that are distinct from the rotor body 7) .

The cavities 6 are in particular arranged at the finite volumes of the rotor 5 having operating temperatures higher than the mean or more preferably higher than the mean increased by one or two times the standard deviation and/or according to an annular configuration around the rotor axis A.

The rotor body 7 has or consists of one or more materials distinct from the material PCM. The one or more materials of the rotor body 7 remain solid at the liquefaction temperature of the material PCM and also preferably for temperatures higher than the latter, at least up to the maximum rated temperature and more preferably also well beyond.

In other words, the rotor body 7 remains solid for temperatures higher than the liquefaction temperature of the material PCM and preferably also higher than the maximum rated temperature.

The cavities 6 are closed to prevent the melted material PCM from flowing out of the cavities 6 when the temperature exceeds or is equal to the liquefaction temperature.

The rotor body 7 can comprise both part of the portion 5a and part of the portion 5b.

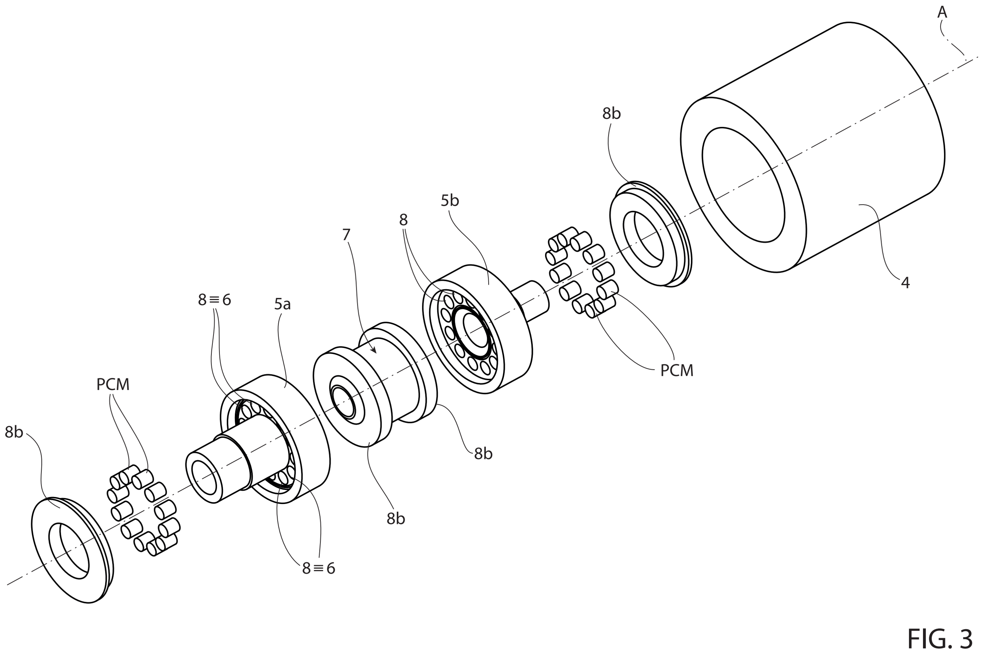

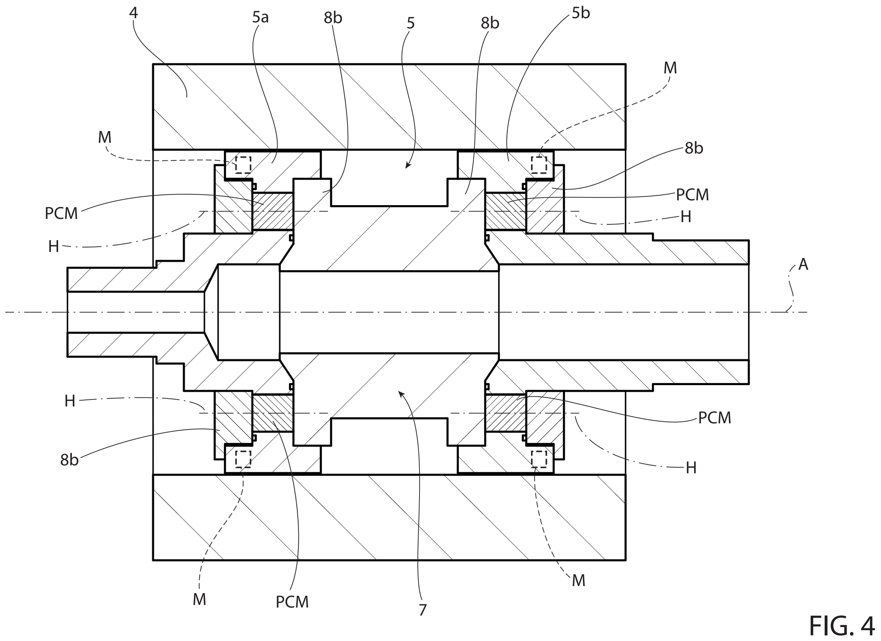

According to the embodiment of figures 3, 4 one or more of the cavities 6 comprises or is more precisely defined by holes 8 on the rotor body 7.

In particular, the holes 8 are axial holes, that is, they extend axially along respective axes H parallel to the axis A.

More in particular, the holes 8 are through holes of the rotor body 7, namely they have both opposite axial ends open.

Here, the cavities 6 are closed by means of capping elements 8b, for example threaded rings or covers, fixed to the rotor body 7 (for example by screwing or welding or since made in one single body) and arranged to axially cap the holes 8, for example at both the relative axial ends, namely to cap the axial ends of each of the holes 8.

In the specific non-limiting example of figures 3, 4, a first and a second part of the holes 8 is respectively obtained on the portions 5a, 5b. Both the first part and the second part of the holes 8 is capped axially on one side by a capping element 8b defined by a single threaded ring axially tightened to the relative portion 5a or 5b, and on the other by a capping element 8b defined by a further portion of the rotor body 7 extending axially in a sandwich arrangement between the portions 5a, 5b.

Clearly, the capping elements 8b of figures 3, 4 could be replaced by two specific caps for each of the axial ends of the holes 8.

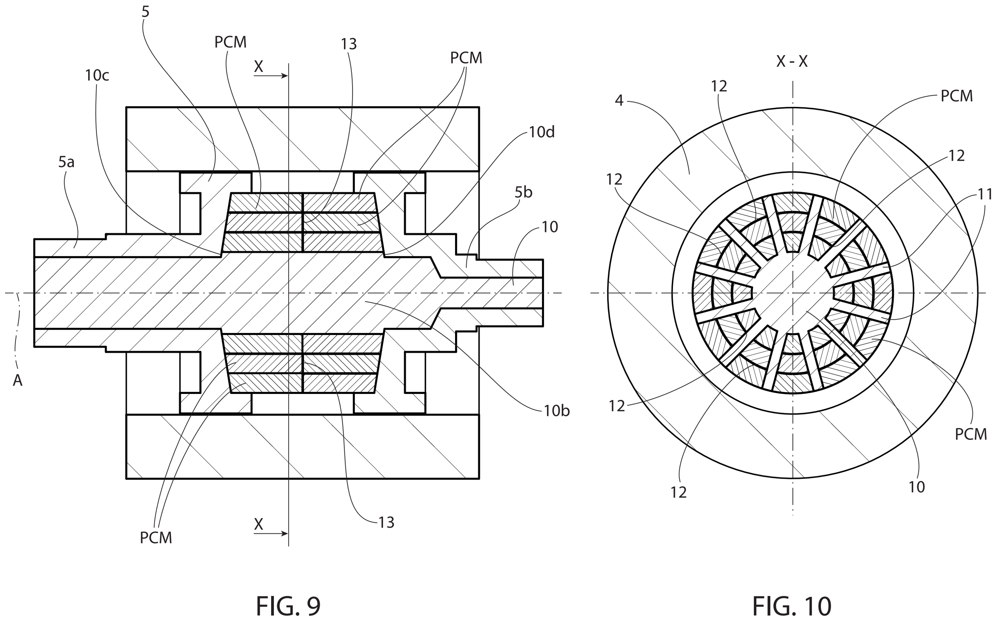

According to the embodiment of figures 4-9, the rotor body 7 comprises a core or body 10 arranged around the rotor axis A.

The core 10 comprises for example a cylindrical portion 10b arranged axially (namely according to the rotor axis A) between the portions 5a, 5b. In particular, optionally, the cylindrical portion 10b extends axially between two opposite ends respectively defining shoulder surfaces 10c, 10d axially in contact with the portions 5a, 5b respectively.

Preferably, the cavities 6 are arranged in respective positions radially outermost with respect to the core 10. Here, the expression radially should be understood with respect to the rotor axis A, namely according to a radius orthogonal to the rotor axis A. For example, the cavities 6 could be arranged radially between the core 10 and the stator 4.

The rotor body 7 could optionally comprise a plurality of spokes or ribs or protrusions or fins 11 (radial) which extend radially in a protruding manner from the core 10. In particular, each of the spokes 11 extends axially for the entire axial dimension of the cylindrical portion 10b.

The spokes 11 are distributed circumferentially around the rotor axis A, so as to form a bundle. In particular, the spokes 11 are distributed circumferentially in a uniform manner, namely according to a constant angular pitch.

In this description, and more generally in the text, the expressions "axially", "circumferentially" and "radially" can be understood respectively as "according to a direction or axis parallel to the axis A", "according to a circumferential direction around the axis A", and "according to a radial direction with respect to the axis A".

The spokes 11 can extend radially until they touch or integrate with the portions 5a, 5b.

Preferably, one or more of the cavities 6 are defined between two spokes 11 according to a circumferential direction around the axis A, namely circumferentially. The two spokes 11 are adjacent to each other circumferentially.

Therefore, circumferentially, the cavities 6 are here closed by the spokes 11 adjacent to each other. Axially, the cavities 6 could be closed for example by the portions 5a, 5b, respectively at an axial side and on the other opposite axial side according to the axis A. Radially, the cavities 6 could be closed at an internal radial side and an external radial side, respectively, by the core 10 and by the stator 4 or partly by the stator 4 and partly by the portions 5a, 5b, as illustrated in the variant of figures 4-6.

According to a possible non-limitative aspect, the cavities 6 (those circumferentially defined between the adjacent spokes 11) are directly delimited circumferentially by the adjacent spokes 11.

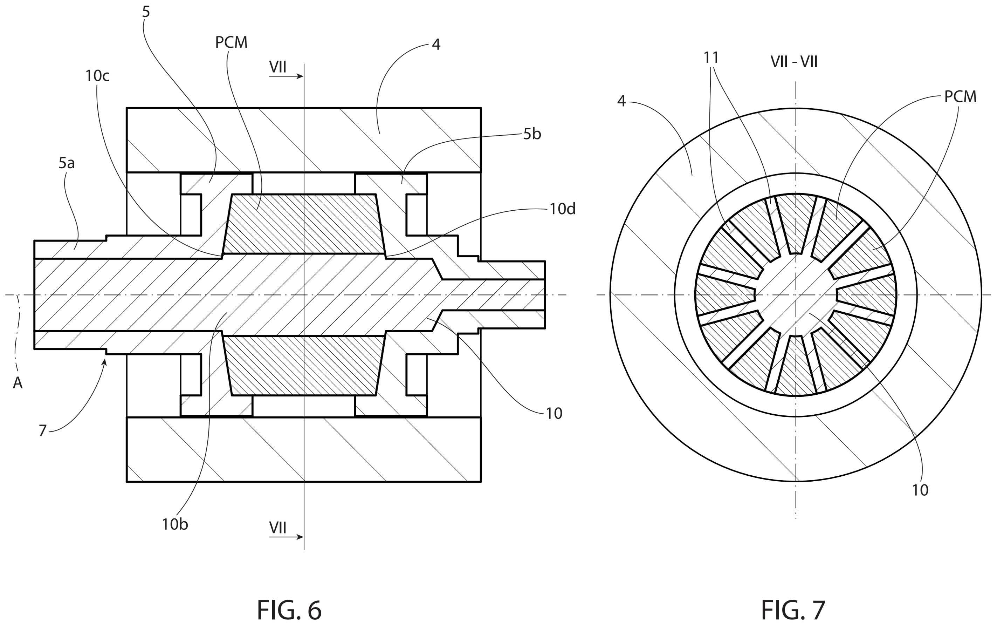

Preferably, as in the variant of figures 7-9, the rotor body 7 comprises one or more radial separation walls 12 connecting two adjacent spokes 11 (circumferentially) to each other. By means of the radial separation walls 12, some or all of the cavities 6 are radially separated from one another by the radial separation walls 12. In other words, each radial separation wall 12 is arranged between the adjacent spokes 11 so as to radially divide the space circumferentially interposed between the spokes 11, thus defining a radial boundary between two cavities 6.

Axially, in particular, each radial separation wall 12 extends throughout the entire axial dimension of the adjacent spokes 11.

For example, each of the radial separation walls 12 (or even only one of them) is shaped in a circular arc around the axis A and/or has a thickness in the radial direction. Several arc-shaped radial separation walls 12 that connect the same two adjacent spokes 11 can be arranged with distinct arc radiuses, so that two of the radial separation walls 12 define or close one of the cavities 6 radially between them.

According to a possible non-limitative aspect, the radial separation walls 12 are permanently joined or are integral to the adjacent spokes 11.

According to a possible non-limitative aspect, the cavities 6 (those circumferentially defined between the adjacent spokes 11) are directly delimited radially by the radial separation walls 12.

Independently, the rotor body 7 could comprise one or more axial separation walls 13 connecting two adjacent spokes 11 (circumferentially) to each other. By means of the axial separation walls 13, some or all of the cavities 6 are axially separated from one another by the axial separation walls 13. In other words, each axial separation wall 13 is arranged between the adjacent spokes 11 so as to axially divide the space circumferentially interposed between the spokes 11, thus defining an axial boundary between two cavities 6.

Radially, in particular, each axial separation wall 13 extends throughout the entire radial dimension of the adjacent spokes 11.

For example, each of the axial separation walls 13 (or even only some of them) is shaped like a sector of a circular crown around the axis A and/or has a thickness along the axis A. Several axial separation walls 13 can be arranged circumferentially aligned around the axis A, so as to form a plurality of petals distributed circumferentially between the spokes 11 around a point of the axis A.

According to a possible non-limitative aspect, the axial separation walls 12 are permanently joined or are integral to the adjacent spokes 11.

According to a possible non-limitative aspect, the cavities 6 (those circumferentially defined between the adjacent spokes 11) are directly delimited axially by the axial separation walls 13.

Where present, the radial separation walls 12 can intersect the axial separation walls 13, thus forming in particular with the rotor body 7 a three-dimensional network or grid defining the complex of the cavities 6.

According to a possible non-limitative aspect, the three-dimensional network or grid is a single piece.

From the above, the advantages of the electric motor 2 according to the invention are evident.

The presence of the material PCM helps cooling of the rotor 5, in particular delaying heating of the rotor 5 during operation of the electric motor 2.

In fact, when the temperature of the rotor 5 reaches the liquefaction temperature of the material PCM, the latter melts, subtracting heat from the rotor 5 in the form of latent liquefaction heat.

Said subtraction of heat prevents the temperature of the rotor 5 from rapidly increasing while the material PCM liquefies.

Said delay in the temperature increase of the rotor 5 is significantly beneficial in the context of a race, where for example the electric motor 2 is used at maximum power and therefore in conditions of maximum heat load only for short distances.

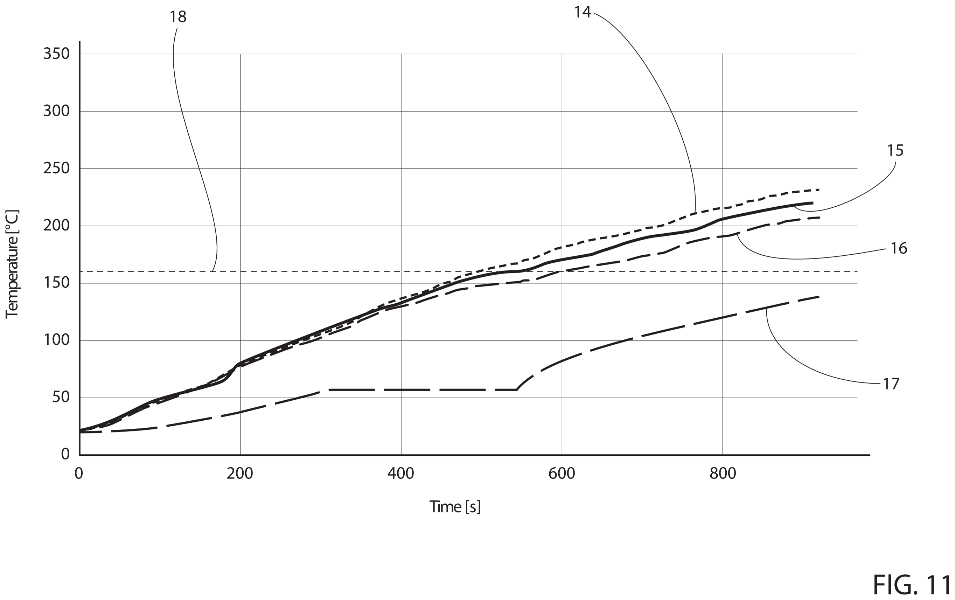

The delay in the temperature increase is illustrated for example via the graph in figure 11, which shows the temperature trend of the rotor 5 over time for a predefined operating condition.

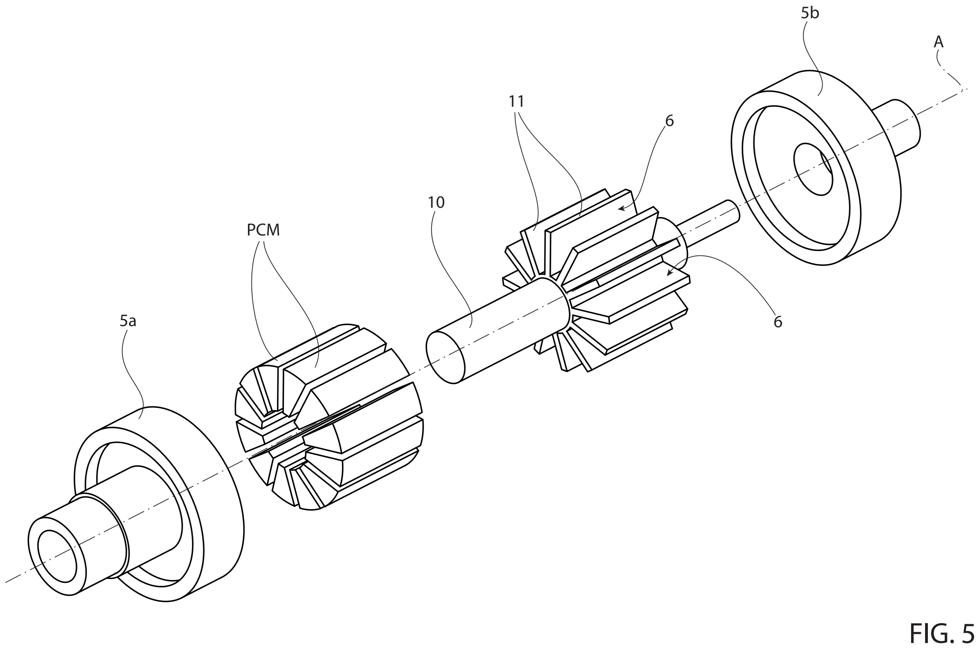

In figure 11, the curves 14, 15, 16, represent the experimental trends (for example obtained via computer simulations) over time of the temperatures of a motor rotor according to the prior art (without material PCM), and then of the rotor 5 of the electric motor 2 for the embodiment of figures 3-4, and for the embodiment of the figures 5-10, respectively.

The curve 16 can be applied to both the variants of figures 5-7 and figures 8-10 since the quantity of the material PCM is substantially the same among the variants.

As can be seen in figure 11, the curve 16 has a slower growth than the curve 15, in turn having a slower growth than the curve 14.

In figure 11, the curve 17 represents the temperature of the material PCM corresponding to the trend of the curve 16. In the curve 17, a constant line can be noted corresponding to the liquefaction temperature of a specific example of the material PCM.

The curve 18 of figure 11 is a line representing the maximum rated temperature.

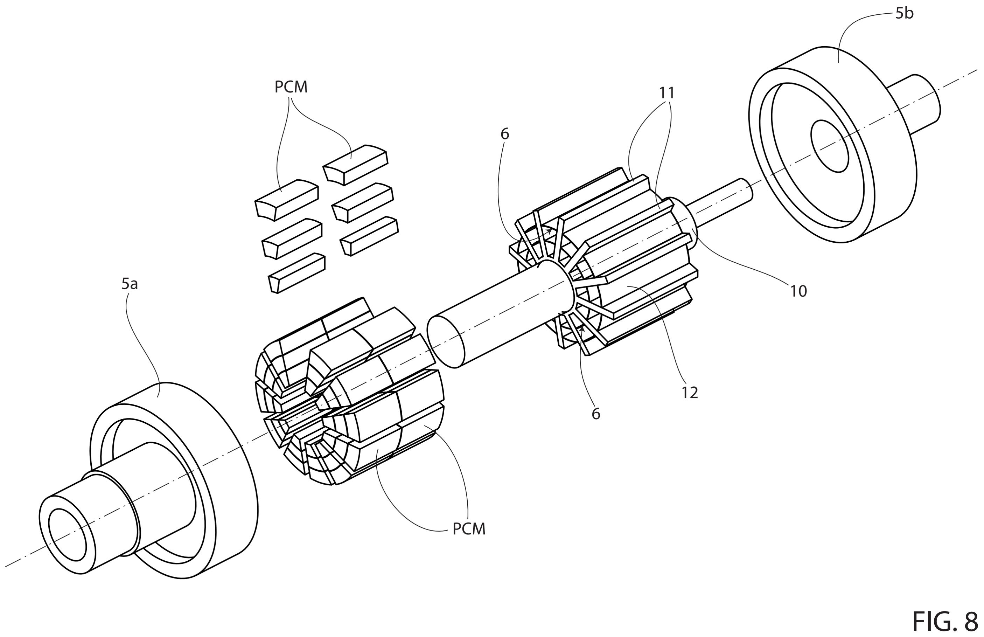

The variant of figures 8-10 has the advantage, with respect to the variant of figures 5-7, of better distributing the material PCM in the cavities 6, reducing the unbalance of the rotor 5 due to movements of the material PCM in the cavities 6 when the material PCM becomes liquid.

The fact that the material PCM and the cavities 6 are arranged in radially more external positions with respect to the core 10 is advantageous since in this way the material PCM is closer to the permanent magnets M, which in the electric motor 2 can be at radially more external portions of the rotor 5.

Lastly it is clear that modifications and variants that do not depart from the protective scope defined by the claims can be made to the electric motor 2 according to the invention.

In particular, the number and shape of each of the components described and illustrated could be different, with particular reference to the spokes 11, the core 10, and the walls 12, 13.

Furthermore, the embodiments illustrated can be combined with one another without limitations of any type, with particular reference to the various characteristics individually described in the various paragraphs of the description. Each of said characteristics is independently applicable to each of the embodiments described.

## Claims

1. An electric motor (2) comprising a stator (4) and a rotor (5) rotatable about a rotor axis (A) fixed with respect to the stator (4), **characterized in that** the rotor (5) comprises a phase change material (PCM) solid or semi-solid at room temperature and adapted to liquefy at a liquefaction temperature within a range of operating temperatures of the electric motor (2) .

2. The electric motor according to claim 1, wherein the rotor (5) comprises a rotor body (7) having a further material distinct from the phase change material (PCM) and solid for a temperature greater than said liquefaction temperature.

3. The electric motor according to claim 2, wherein the rotor body (7) has a plurality of cavities (6) containing the phase change material (PCM).

4. The electric motor according to claim 3, wherein the cavities (6) comprise axial holes (8) on the rotor body (7), the axial holes (8) extending axially along respective axes (H) parallel to the rotor axis (A).

5. The electric motor according to claim 4, wherein the axial holes (8) define through holes of the rotor body (7), whereby the electric motor (2) comprises capping elements (8b) fixed to the rotor body (7) and arranged to axially cap the through holes.

6. The electric motor according to claim 3, wherein the rotor body (7) comprises a core (10) arranged around the rotor axis (A) and a plurality of spokes (11) radially extending in a protruding manner from the core (10), wherein at least one or more of the cavities (6) are circumferentially defined between two said spokes (11) adjacent to each other.

7. The electric motor according to claim 6, wherein the rotor body (7) further comprises one or more radial separation walls (12) connecting the two said adjacent spokes (11), whereby the cavities (6) circumferentially defined between the two said adjacent spokes (11) are also radially separated from each other by the radial separation walls (12).

8. The electric motor according to claim 6 or 7, wherein the rotor body (7) further comprises one or more axial separation walls (13) connecting the two said adjacent spokes (11), whereby the cavities (6) circumferentially defined between the two said adjacent spokes (11) are also axially separated from each other via the axial separation walls (13).

9. The electric motor according to any one of the preceding claims, wherein the rotor (5) further comprises one or more permanent magnets (M).

10. The electric motor according to any one of the preceding claims, wherein the phase change material (PCM) constitutes a volume percentage of the rotor (5) greater than 20%, more preferably greater than 70%.
